(19) Europäisches Patentamt
European Patent Office
Office européen des brevets

(11) **EP 4 730 685 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
**H04L 5/00** (2006.01)

(21) Application number: **24822454.5**

(52) Cooperative Patent Classification (CPC):
**H04B 7/08; H04L 5/00; H04W 72/044**

(22) Date of filing: **14.05.2024**

(86) International application number:
**PCT/CN2024/093069**

(87) International publication number:
**WO 2024/255502 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 CN 202310723470**

(71) Applicant: **Datang Mobile Communications Equipment Co., Ltd.
Beijing 100085 (CN)**

(72) Inventors:
• **ZUO, Jun
Beijing 100085 (CN)**
• **GAO, Qiubin
Beijing 100085 (CN)**

(74) Representative: **Ipsilon
12, avenue d'Italie
75013 Paris (FR)**

(54) **INFORMATION TRANSMISSION METHOD AND APPARATUS, AND STORAGE MEDIUM**

(57) The present application provides an information transmission method and apparatus, and a storage medium. The method comprises: determining reporting information meeting a reporting condition, the reporting information being used for training an artificial intelligence model or being used for determining a beam/beam pair having an optimal transmission signal; and splitting the reporting information into a first part of information and a second part of information and sending same to a network device.

FIG. 1

**Description**

**CROSS-REFERENCES TO RELATED APPLICATIONS**

The present application claims priority to Chinese patent application No. 202310723470.X, filed on June 16, 2023, entitled "Information Transmission Method and Apparatus, and Storage Medium", which is hereby incorporated by reference in its entirety.

**FIELD**

The present application relates to the field of communications technology, in particular to methods and apparatuses for information transmission, and storage media.

**BACKGROUND**

Currently, for beam management based on artificial intelligence/machine learning (AI/ML), a terminal/user equipment (UE) is required to report X layer 1 reference signal received powers (L1-RSRPs) and the corresponding X reference signal indexes to a network device, or to report optimal K (Top-K) beams/beam pairs obtained through model inference.

To reduce feedback overhead of the UE, some solutions propose that the UE may only report L1-RSRPs of a part of the beams/beam pairs, or reduce a number of optimal beams/beam pairs to be reported. That is, X and K are configured by a base station and may be configured to be smaller values.

However, while the above-mentioned solution may reduce the feedback overhead of the UE, it fails to guarantee performance of an AI/ML model.

**SUMMARY**

Embodiments of the present application provide methods and apparatuses for information transmission, and storage media, to solve the problem of poor performance of an AI/ML model in the related art.

Embodiments of the present application provide an information transmission method, performed by a terminal, including:

determining reporting information meeting a reporting condition, where the reporting information is used for training an artificial intelligence model or used for determining an optimal beam/beam pair for signal transmission; and

splitting the reporting information into a first part of information and a second part of information, and sending the first part of information and the second part of information to a network device.

In some embodiments, the first part of information occupies a fixed number of bits, and a number of bits occupied by the second part of information is determined by content of the first part of information.

In some embodiments, in case that the reporting information is used for training the artificial intelligence model, the reporting information includes qualities and indexes of reference signals meeting the reporting condition.

In some embodiments, the reference signals meeting the reporting condition include a reference signal whose corresponding layer 1 reference signal received power (L1-RSRP) is greater than or equal to a first threshold.

In some embodiments, the first part of information includes a number of the reference signals meeting the reporting condition, and the second part of information includes the qualities and indexes of the reference signals meeting the reporting condition.

In some embodiments, the first part of information includes a bitmap mapped to the indexes of the reference signals meeting the reporting condition, and the second part of information includes qualities of the reference signals corresponding to an order of the indexes of the reference signals mapped by the bitmap.

In some embodiments, the first part of information includes qualities and indexes of a part of the reference signals meeting the reporting condition, and further includes a number of reference signals reported by the second part of information; and the second part of information includes qualities and indexes of another part of the reference signals meeting the reporting condition.

In some embodiments, the first part of information includes a bitmap mapped to the indexes of the reference signals meeting the reporting condition, and qualities of a part of the reference signals corresponding to an order of the indexes of the reference signals mapped by the bitmap; and the second part of information includes qualities of another part of the reference signals corresponding to the order of the indexes of the reference signals mapped by the bitmap.

In some embodiments, a quality of the reference signal is a L1-RSRP value of the reference signal and/or a differential value of L1-RSRPs of reference signals.

In some embodiments, in case that the reporting information is used for determining the optimal beam/beam pair for signal transmission, the reporting information includes indexes of beams/beam pairs meeting the reporting condition obtained through model inference.

In some embodiments, the method further includes:

performing the model inference based on a trained artificial intelligence model, and determining a confidence corresponding to each beam/beam pair output by the artificial intelligence model; and

determining the indexes of the beams/beam pairs meeting the reporting condition based on the confidence corresponding to each beam/beam pair.

In some embodiments, the indexes of the beams/beam pairs meeting the reporting condition include indexes of a minimum number of beams/beam pairs whose total confidence is greater than or equal to a second threshold.

In some embodiments, the first part of information includes indexes of a part of the beams/beam pairs meeting the reporting condition; and the second part of information includes indexes of another part of the beams/beam pairs meeting the reporting condition.

Embodiments of the present application provide an information transmission method, performed by a network device, including:

obtaining reporting information reported by a terminal, where the reporting information is used for training an artificial intelligence model or used for determining an optimal beam/beam pair for signal transmission, and the reporting information is reported after being split into a first part of information and a second part of information.

In some embodiments, in case that the reporting information is used for training the artificial intelligence model, the reporting information includes qualities and indexes of reference signals meeting a reporting condition.

In some embodiments, the method further includes:

determining a training sample for model training based on the qualities and indexes of reference signals meeting the reporting condition; and

training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the method further includes:

performing beam scanning according to the indexes of the beams/beam pairs meeting the reporting condition, where the beam scanning is for determining the optimal beam/beam pair for signal transmission through beam measurement; and

obtaining the optimal beam/beam pair for signal transmission reported by the terminal.

Embodiments of the present application provide a terminal, including a memory, a transceiver, and a processor.

The memory is used for storing a computer program; the transceiver is used for receiving and transmitting data under control of the processor; and the processor is used for reading the computer program in the memory and performing following operations:

determining reporting information meeting a reporting condition, where the reporting information is used for training an artificial intelligence model or used for determining an optimal beam/beam pair for signal transmission; and

splitting the reporting information into a first part of information and a second part of information, and sending the first part of information and the second part of information to a network device.

In some embodiments, the first part of information occupies a fixed number of bits; and a number of bits occupied by the second part of information is determined by content of the first part of information.

In some embodiments, in case that the reporting information is used for training the artificial intelligence model, the reporting information includes qualities and indexes of reference signals meeting the reporting condition.

In some embodiments, the reference signals meeting the reporting condition include a reference signal whose corresponding layer 1 reference signal received power (L1-RSRP) is greater than or equal to a first threshold.

In some embodiments, the first part of information includes a number of the reference signals meeting the reporting condition; and the second part of information includes the qualities and indexes of the reference signals meeting the reporting condition.

In some embodiments, the first part of information includes a bitmap mapped to the indexes of the reference signals meeting the reporting condition; and the second part of information includes qualities of the reference signals corresponding to an order of the indexes of the reference signals mapped by the bitmap.

In some embodiments, the first part of information includes qualities and indexes of a part of the reference signals meeting the reporting condition, and further includes a number of reference signals reported by the second part of information. The second part of information includes qualities and indexes of another part of the reference signals meeting the reporting condition.

In some embodiments, the first part of information includes a bitmap mapped to the indexes of the reference signals meeting the reporting condition, and qualities of a part of the reference signals corresponding to an order of the indexes of the reference signals mapped by the bitmap. The second part of information includes qualities of another part of the reference signals corresponding to the order of the indexes of the reference signals mapped by the bitmap

In some embodiments, a quality of the reference signal is a L1-RSRP value of the reference signal and/or a differential value of L1-RSRPs of reference signals.

In some embodiments, in case that the reporting information is used for determining the optimal beam/beam pair for signal transmission, the reporting information includes indexes of beams/beam pairs meeting the reporting condition obtained through model inference.

In some embodiments, the processor is further used for reading the computer program in the memory and performing following operations:

performing the model inference based on a trained artificial intelligence model, and determining a confidence corresponding to each beam/beam pair output by the artificial intelligence model; and

determining the indexes of the beams/beam pairs meeting the reporting condition based on the confidence corresponding to each beam/beam pair.

In some embodiments, the indexes of the beams/beam pairs meeting the reporting condition include indexes of a minimum number of beams/beam pairs whose total confidence is greater than or equal to a second threshold.

In some embodiments, the first part of information includes indexes of a part of the beams/beam pairs meeting the reporting condition; and the second part of information includes indexes of another part of the beams/beam pairs meeting the reporting condition.

Embodiments of the present application provide a network device, including a memory, a transceiver, and a processor.

The memory is used for storing a computer program; the transceiver is used for receiving and transmitting data under control of the processor; and the processor is used for reading the computer program in the memory and performing following operation:

obtaining reporting information reported by a terminal, where the reporting information is used for training an artificial intelligence model or used for determining an optimal beam/beam pair for signal transmission, and the reporting information is reported after being split into a first part of information and a second part of information.

In some embodiments, in case that the reporting information is used for training the artificial intelligence model, the reporting information includes qualities and indexes of reference signals meeting a reporting condition.

In some embodiments, the processor is further used for reading the computer program in the memory and performing following operations:

determining a training sample for model training based on the qualities and indexes of reference signals meeting the reporting condition; and

training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the processor is further used for reading the computer program in the memory and performing following operations:

performing beam scanning according to the indexes of the beams/beam pairs meeting the reporting condition; the beam scanning is for determining the optimal beam/beam pair for signal transmission through beam measurement; and

obtaining the optimal beam/beam pair for signal transmission reported by the terminal.

Embodiment of the present application provide an information transmission apparatus, including:

a first determining module, used for determining reporting information meeting a reporting condition, where the reporting information is used for training an artificial intelligence model or used for determining an optimal beam/beam pair for signal transmission; and

a sending module, used for splitting the reporting information into a first part of information and a second part of information, and sending the first part of information and the second part of information to a network device.

In some embodiments, the first part of information occupies a fixed number of bits, and a number of bits occupied by the second part of information is determined by content of the first part of information.

In some embodiments, in case that the reporting information is used for training the artificial intelligence model, the reporting information includes qualities and indexes of reference signals meeting the reporting condition.

In some embodiments, the reference signals meeting the reporting condition include a reference signal whose corresponding layer 1 reference signal received power (L1-RSRP) is greater than or equal to a first threshold.

In some embodiments, the first part of information includes a number of the reference signals meeting the reporting condition, and the second part of information includes the qualities and indexes of the reference signals meeting the reporting condition.

In some embodiments, the first part of information includes a bitmap mapped to the indexes of the reference signals meeting the reporting condition, and the second part of information includes qualities of the reference signals corresponding to an order of the indexes of the reference signals mapped by the bitmap.

In some embodiments, the first part of information includes qualities and indexes of a part of the reference signals meeting the reporting condition, and further includes a number of reference signals reported by the second part of information; and the second part of information includes qualities and indexes of another part of the reference signals meeting the reporting condition.

In some embodiments, the first part of information includes a bitmap mapped to the indexes of the reference signals meeting the reporting condition, and qualities of a part of the reference signals corresponding to an order of the indexes of the reference signals mapped by the bitmap; and the second part of information includes qualities of another part of the reference signals corresponding to the order of the indexes of the reference signals mapped by the bitmap.

In some embodiments, a quality of the reference signal is a L1-RSRP value of the reference signal and/or a differential value of L1-RSRPs of reference signals.

In some embodiments, in case that the reporting information is used for determining the optimal beam/beam pair for signal transmission, the reporting information includes indexes of beams/beam pairs meeting the reporting condition obtained through model inference.

In some embodiments, the apparatus further includes a second determining module and a third determining module.

The second determining module is used for performing the model inference based on a trained artificial intelligence model and determining a confidence corresponding to each beam/beam pair output by the artificial intelligence model.

The third determining module is used for determining the indexes of the beams/beam pairs meeting the reporting condition based on the confidence corresponding to each beam/beam pair.

In some embodiments, the indexes of the beams/beam pairs meeting the reporting condition includes indexes of a minimum number of beams/beam pairs whose total confidence is greater than or equal to a second threshold.

In some embodiments, the first part of information includes indexes of a part of the beams/beam pairs meeting the reporting condition, and the second part of information includes indexes of another part of the beams/beam pairs meeting the reporting condition.

Embodiments of the present application provide an information transmission apparatus, including:
a first obtaining module, used for obtaining reporting information reported by a terminal, where the reporting information is used for training an artificial intelligence model or used for determining an optimal beam/beam pair for signal transmission, and the reporting information is reported after being split into a first part of information and a second part of information.

In some embodiments, in case that the reporting information is used for training the artificial intelligence model, the reporting information includes qualities and indexes of reference signals meeting the reporting condition.

In some embodiments, the apparatus further includes a fourth determining module and a training module, where

the fourth determining module is used for determining a training sample for model training based on the qualities and indexes of reference signals meeting the reporting condition; and

the training module is used for training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the apparatus further includes a beam scanning module and a second obtaining module, where

the beam scanning module is used for performing beam scanning according to the indexes of the beams/beam pairs meeting the reporting condition, and the beam scanning is for determining the optimal beam/beam pair for signal transmission through beam measurement; and

the second obtaining module is used for obtaining the optimal beam/beam pair for signal transmission reported by the terminal.

Embodiments of the present application provide a processor-readable storage medium storing a computer program, and the computer program is used to cause a processor to perform any of the information transmission methods described above.

In an eighth aspect, an embodiment of the present application provides a computer-readable storage medium storing a computer program, and the computer program is used to cause a computer to perform any of the information transmission method described above.

In a ninth aspect, an embodiment of the present application provides a communication device readable storage medium storing a computer program, and the computer program is used to cause the communication device to perform any of the information transmission method described above.

In a tenth aspect, an embodiment of the present application provides a chip product readable storage medium storing a computer program, and the computer program is used to cause the chip product to perform any of the information transmission methods described above.

In the methods and apparatuses for information transmission, and storage media provided by the embodiments of the present application, when information related to an artificial intelligence model is reported, reporting information meeting a reporting condition is split into a first part of information and a second part of information and sent to a network device, reducing feedback overhead of a user equipment (UE) and ensuring performance of the artificial intelligence model.

## BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.

FIG. 1 is a first schematic flowchart of an information transmission method provided by an embodiment of the present application;

FIG. 2 is a second schematic flowchart of an information transmission method provided by an embodiment of the present application;

FIG. 3 is a schematic structural diagram of a terminal provided by an embodiment of the present application;

FIG. 4 is a schematic structural diagram of a network device provided by an embodiment of the present application;

FIG. 5 is a first schematic structural diagram of an information transmission apparatus provided by an embodiment of the present application; and

FIG. 6 is a second schematic structural diagram of an information transmission apparatus provided by an embodiment of the present application.

## DETAILED DESCRIPTION

In a New Radio (NR) system, to counteract path loss in high-frequency scenarios, a transmitter and a receiver obtain a matched beam pair through Beam Management (BM) to improve beamforming gain. In the relevant downlink beam management process, a base station needs to cyclically transmit transmit beams (Tx beam) in different directions. A user equipment (UE) receives the Tx beam using a receive beam (Rx beam) and measures the channel state information-reference signal (CSI-RS)/synchronization signal block (SSB) signal transmitted on all Tx beams, selects X beams (X= 1,2,4) with the best reception performance (such as layer 1 reference signal received power (L1-RSRP)) and reports the information of indexes of reference signals corresponding to these X beams to the base station. The base station selects an appropriate Tx beam for subsequent communication according to the information reported by the UE, and indicates the selected beam information to the UE.

To obtain an optimal beam pair, the base station needs to transmit the CSI-RS/SSB on all Tx beams, resulting in a significant resource consumption for the reference signals. The UE needs to use all Rx beams to measure the CSI-RS/SSB transmitted on all Tx beams respectively, resulting in a large measurement overhead. To address these issues, an artificial intelligence/machine learning (AI/ML) technique is proposed. Based on a measurement of a part of beams/beam pairs or historical measurement result for the beams/beam pairs, the optimal beam/beam pair may be predicted, reducing the transmission resource for reference signal (RS), the measurement overhead and measurement latency for the UE.

Model training/model inference/model monitoring/model update may be performed either on the base station side or the UE side. If the model inference is performed on the base station side, the UE needs to report quality of a measured beam/beam pair (such as L1-RSRP) to the base station as an input for the model. If the model training/update is performed on the base station side, in addition to reporting the quality of the measured beam/beam pair, the UE also needs to report label information used for model training. The label information may be indexes of the Top-K beams/beam pairs or the L1-RSRP of the predicted set of the beams/beam pairs. When a total number of beams/beam pairs to be reported and the corresponding L1-RSRPs is large, the reporting overhead is relatively high. If the model inference is performed on the UE side, the UE needs to report indexes of the predicted Top-K beams/beam pairs according to an inference result.

AI/ML-based beam management is one of the research cases for an air interface AI/ML project. Currently, the following two sub- cases are designated as sub cases for the AI/ML beam management:

BM-case1: Space-domain beam prediction, i.e., predicting Top-K beams/beam pairs in Set A based on Set B measured at a certain time; and

BM-case2: Time-domain beam prediction, i.e., predicting the Top-K beams/beam pairs in Set A at the future N' moments based on Set B measured at N historical moments.

Set B or Set A may be a set of downlink transmit beams (DL Tx beams) or a set of transmit-receive beam pairs (Tx-Rx beam pairs). In the prediction for the downlink transmit beam, the UE fixes or selects an optimal Rx beam, and measures reference signal received powers (RSRPs) of part of the DL Tx beams (Set B) transmitted from the base station. The base station or the UE predicts the Tx beams corresponding to the Top-K RSRPs in Set A based on a measurement result of Set B, which is known as the prediction for Top-K downlink transmit beams. In the prediction for the transmit-receive beam pair, one beam pair consists of one Tx beam of the base station and one Rx beam of the UE. The UE measures the RSRP of the beam pair in Set B. The base station or the UE predicts the beam pairs corresponding to the Top-K RSRPs in Set A based on the measurement result of Set B, which is known as the prediction for Top-K transmit-receive beam pairs. An output of an AI/ML model may be either the identities (IDs) of the predicted Top-K beam pairs in Set A, or the RSRPs of the predicted beam pairs in Set A. For the latter, the Top-K beam pairs may be selected according to the size of the predicted RSRPs. Set B may be a subset of Set A or not the subset of Set A (e.g., Set B is composed of wide beams while Set A is composed of narrow beams).

In the relevant channel state information (CSI) reporting scheme, the method for reporting L1-RSRP is as follows: the base station configures the UE with measured reference signals and the number X of reference signals to be reported (X = 1/2/4), and the UE reports the L1-RSRPs of X reference signals in a differential manner (the largest L1-RSRP occupies 7 bits, and the other L1-RSRPs occupy 4 bits) and an index of a reference signal corresponding to each L1-RSRP.

The above-mentioned method for reporting the L1-RSRPs of the reference signals involves reporting X L1-RSRPs and the corresponding indexes of X reference signals. Since X is configured by the base station, the overhead for each report is fixed. For beam management based on the AI/ML model, if the model training is performed on the network side, the network device needs to obtain L1-RSRPs of all beams/beam pairs in Set B, or L1-RSRPs of all beams/beam pairs in both Set A and Set B. To reduce the feedback overhead of the UE, one solution has been proposed that the UE only reports the L1-RSRPs of a part of the beams/beam pairs and a number of the reported beams/beam pairs configured by the network side. When the channel environment changes, the quality of the beam pair between the UE and the base station also varies. For example, most beam pairs measured at moment 1 have good quality, while most beam pairs measured at moment 2 have poor quality. If the base station is configured to report the number of the reported beams, there may be scenarios where the number of the reported beams configured by the base station is small and the UE only reports some beams with good quality. And there may be other scenarios where the number of the reported beams configured by the base station is large and the UE not only reports beams with good quality but also a part of beams with poor quality, resulting in poor performance of AI/ML model training.

If the model inference is performed on the UE side, the UE needs to report the information of Top-K beams/beam pairs obtained through inference to the base station. To improve the accuracy of obtaining an optimal beam, after receiving the information of the Top-K beams reported by the UE, the base station may scan these K beams/beam pairs. After measuring these K beams/beam pairs, the UE reports the optimal beam/beam pair to the base station. If a classification model is used on the UE side, an output of an AI/ML model on the UE side is the confidence (i.e., probability) of the optimal beam/beam pair in Set A. Under different channel conditions, the L1-RSRP values of the reference signals in Set B are different, and the probabilities obtained through different rounds of inference are also different. If the K optimal beams/beam pairs obtained through the model inference and reported by the UE are fixed, there may be scenarios where several beams/beam pairs have relatively high probabilities, and it is unnecessary to report indexes of other beams/beam pairs with relatively lower probabilities, i.e., K is set relatively large. There may be other scenarios where many beams/beam pairs have relatively close probabilities, i.e., K is set relatively small. Whether K is set relatively large or small, the accuracy of the optimal beam/beam pair obtained based on the AI/ML model is reduced, deteriorating the performance of the AI/ML model to deteriorate.

Based on the above technical issues, in the embodiments of the present application, the reporting condition is set. For example, the UE may report quality of a beam with a good condition (for example, L1-RSRP is greater than or equal to a certain threshold). Under this reporting rule, the number of L1-RSRPs or the number of indexes of the beams/beam pairs meeting the reporting condition (such as being greater than or equal to the threshold) is variable. Furthermore, by reasonably splitting the L1-RSRP reporting content, the problem that the base station may not demodulate because it does not know in advance the quality of the beams reported by the UE or a number of bits required for reporting is avoided, balancing the training performance of the AI/ML model and the reporting overhead.

For a scenario where the model inference is performed on the UE side, a number of optimal predicted beams/beam pairs to be reported is determined based on the inference result of the UE. For example, the beams obtained from the model inference whose total confidence is greater than or equal to the threshold are reported in descending order of confidence. In this case, the number of beams/beam pairs meeting the reporting condition and obtained from each round of inference is variable. Furthermore, by reasonably splitting the L1-RSRP reporting content, the problem that the base station may not demodulate because it does not know in advance the quality of the beams reported by the UE or the number of bits required for reporting is avoided, balancing the accuracy of an optimal beam/beam pair obtained based on the AI/ML model and the reporting overhead.

In order to make the purpose, solutions and advantages of the embodiments of the present application clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application. Based on the embodiments of the present application, all other embodiments obtained by those skilled in the art without creative work shall fall within the scope of protection of the present application.

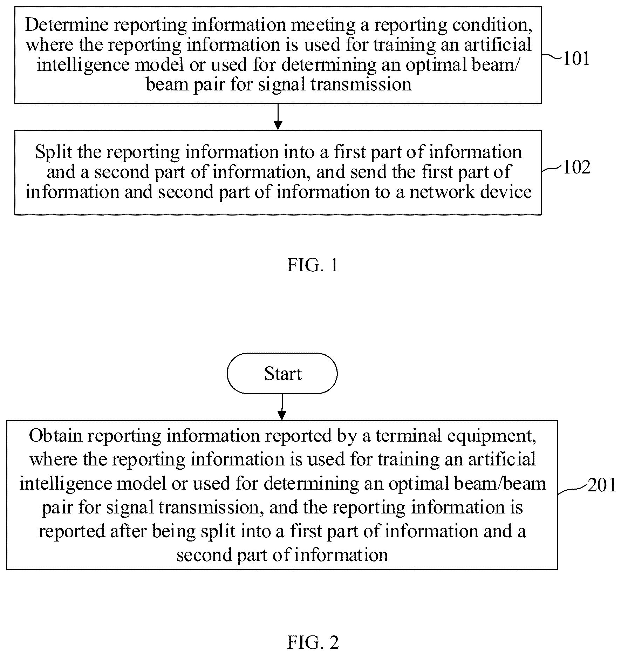

FIG. 1 is a first schematic flowchart of an information transmission method provided by an embodiment of the present application. As shown in FIG. 1, the embodiment of the present application provides an information transmission method, the execution subject of which may be a user equipment (UE), such as a mobile phone. The method includes:
Step 101: determining reporting information meeting a reporting condition, where the reporting information is used for training an artificial intelligence model or used for determining an optimal beam/beam pair for signal transmission.

In an embodiment of the present application, the UE first determines the reporting information meeting the reporting condition.

The reporting condition may be pre-agreed upon in the agreement or configured by a network device. The network device in the embodiment of the present application may be an access network device, such as a base station, or a core network device, such as an access and mobility management function (AMF) network element.

The content of the reporting information may vary in different application scenarios.

For example, in case that model training is performed on a network side, the reporting information includes qualities and indexes of reference signals meeting the reporting condition, and the reporting information is used for training the artificial intelligence model.

For example, in case that model inference is performed on the UE side, the reporting information includes indexes of the beams/beam pairs meeting the reporting condition obtained through model inference, and the reporting information is used for determining the optimal beam/beam pair for signal transmission.

Step 102: splitting the reporting information into a first part of information and a second part of information, and sending the first part of information and the second part of information to a network device.

In an embodiment of the present application, after determining the reporting information meeting the reporting condition, the UE splits the reporting information into a first part of information (part1) and a second part of information (part2), and sends the split part1 and part2 to the network device.

For example, part1 may occupy a fixed number of bits, and a number of bits occupied by part2 is determined by content of part1. The network device may determine the number of bits occupied by part2 according to the content of part1. When both part1 and part2 are reported via physical uplink control channel (PUCCH) resource, the UE determines the number of bits to be reported in part2 according to reported content in part2, ensuring that the network device and the UE are consistent in determining the PUCCH resource for transmitting the reporting information. The reported content in part2 is configured by the network side or specified in the protocol.

For example, part1 may occupy a fixed number of bits, while the number of bits occupied by part2 may be reported to the network device via other information, ensuring that the network device and the UE are consistent in determining the PUCCH resource for transmitting the reporting information.

For example, part1 and part2 may use the same transmission coding rate.

For example, part1 and part2 may use different transmission coding rates. Part1 may use a fixed transmission coding rate, and the network device determines the transmission coding rate of part2 according to the content of part1.

In the information transmission method provided by the embodiment of the present application, when reporting information related to an artificial intelligence model, the reporting information meeting the reporting condition is split into the first part of information and the second part of information and sent to the network device, reducing the feedback overhead of the UE and ensuring the performance of the artificial intelligence model.

In some embodiments, the first part of information occupies a fixed number of bits, and a number of bits occupied by the second part of information is determined by content of the first part of information.

In an embodiment of the present application, part1 occupies a fixed number of bits, and a number of bits occupied by part2 is determined by content of part1.

The network device determines the number of bits occupied by part2 according to the content of part1. When both part1 and part2 are reported via the PUCCH resource, the network device determines the number of bits to be reported in part2 according to referred reporting content of part2, ensuring that the network device and UE are consistent in determining the PUCCH resource for transmitting the reporting information.

In the information transmission method provided by the embodiment of the present application, part1 occupies a fixed number of bits, and a number of bits occupied by part2 is determined based on content of part1, further reducing the feedback overhead while ensuring the performance of the artificial intelligence model.

In some embodiments, in case that the reporting information is used for training an artificial intelligence model, the reporting information includes qualities and indexes of reference signals meeting the reporting condition.

In an embodiment of the present application, the reporting information is used for training the artificial intelligence model, and the reporting information includes qualities and indexes of reference signals meeting the reporting condition.

After obtaining the qualities and indexes of reference signals meeting the reporting condition, the network device determines a training sample for model training based on the qualities and indexes of reference signals meeting the reporting condition, and uses the training sample to train the artificial intelligence model.

For example, the UE may only report L1-RSRPs and indexes of reference signals meeting the condition. During the model training phase, the reporting condition for L1-RSRP is greater than or equal to a threshold Threshold1, which may be configured by the network side or specified in the protocol.

If inputs of the model are RSRPs of beams/beam pairs in Set B, and outputs of the model are predicted IDs of Top-K beams/beam pairs in Set A, during training, after the RSRPs of the beams/beam pairs in Set B whose RSRP is lower than the threshold Threshold1 is set to 0, all the RSRPs of the beams/beam pairs in Set B are used as the input the model for training.

If inputs of the model are the RSRPs of the beams/beam pairs in Set B, and the outputs of the model are predicted RSRPs of beams/beam pairs in Set A, during training, after the RSRPs of the beams/beam pairs in Set B whose RSRP is lower than the threshold Threshold1 is set to 0, all the RSRPs of the beams/beam pairs in Set B is used as the inputs of the model, and after the RSRPs of the beams/beam pairs in Set A whose RSRP is lower than the threshold Threshold1 is set to 0, all the RSRPs of the beams/beam pairs in Set A are used as the training label for model training.

During the model inference phase, if model inference is performed on a network side, the UE reports corresponding index of a reference signal in Set B with L1-RSRP being greater than or equal to the threshold and a corresponding L1-RSRP. The base station uses the L1-RSRP reported by the UE and sets the L1-RSRP of a beam/beam pair in Set B that the UE did not report to 0 as the model input for inference. If the model inference is performed on the UE side, the UE performs the model inference and reports index values meeting the condition, and the index values are used to represent the beams/beam pairs in Set A.

In the information transmission method provided in the present application, in case that reporting information is used for training an artificial intelligence model, the reporting information includes qualities and indexes of reference signals meeting the reporting condition, ensuring the performance of the artificial intelligence model training.

In some embodiments, the reference signals meeting the reporting condition include a reference signal whose corresponding L1-RSRP is greater than or equal to a first threshold.

In an embodiment of the present application, the reference signals meeting the reporting condition include a reference signal whose corresponding L1-RSRP is greater than or equal to a first threshold. For example, the reporting condition for L1-RSRP is greater than or equal to a threshold Threshold1, and Threshold1 may be configured by the network side or specified in the protocol.

In the information transmission method provided by the embodiment of the present application, the reference signals meeting the reporting condition include a reference signal whose corresponding L1-RSRP is greater than or equal to a first threshold, reducing the feedback overhead of the UE and ensuring the performance of the artificial intelligence model training.

In some embodiments, the first part of information includes a number of the reference signals meeting the reporting condition, and the second part of information includes the qualities and indexes of the reference signals meeting the reporting condition.

In an embodiment, there are multiple ways to split the reporting information into part1 and part2. In an embodiment of the present application, part1 includes the number of reference signals meeting the reporting condition, and part2 includes the qualities and indexes of the reference signals meeting the reporting condition.

The quality of the reference signal may be a L1-RSRP value of the reference signal and/or a differential value of L1-RSRPs of reference signals.

For example, part1 includes the number N of reference signals meeting the reporting condition (or reported in part2), and part2 includes N L1-RSRPs and their corresponding indexes. When reporting N RSRPs, differential reporting may be adopted, reporting the baseline measurement value (e.g., the largest L1-RSRP measurement value) and the differential values between the remaining N-1 RSRPs meeting the reporting condition and the largest L1-RSRP. The largest L1-RSRP is quantized into L bits, and the differential L1-RSRP is quantized into X bits.

UE may report that the number of bits occupied by the part1 is $\lceil \log_2(M + 1) \rceil$, where M is the number of reference signals configured by the base station for user measurement (for example, the number of the reference signals corresponding to the beams/beam pairs in Set B). When the UE determines the size of the resources for reporting part2, it is determined according to referred reporting content in part2. The referred reporting content in part2 refers to S L1-RSRPs and the corresponding indexes, where the value of S is configured by the base station or specified in the protocol.

In the information transmission method provided in an embodiment of the present application, part1 includes a number of reference signals meeting the reporting condition, and part2 includes the qualities and indexes of the reference signals meeting the reporting condition, ensuring that the network side knows the number of bits required for the information reported by the UE, and enabling the network side to successfully demodulate the information reported by the UE.

In some embodiments, the first part of information includes a bitmap mapped to the indexes of the reference signals meeting the reporting condition, and t qualities of the reference signals corresponding to an order of the indexes of the reference signals mapped by the bitmap.

In an embodiment, there are multiple ways to split the reporting information into part1 and part2. In the embodiment of the present application, part1 includes a bitmap mapped to the indexes of the reference signals meeting the reporting condition, and part2 includes qualities of the reference signals corresponding to an order of the indexes of the reference signals mapped by the bitmap.

For example, part1 includes a bitmap, and the bitmap is used to indicate which reference signal among the measured reference signals meets the reporting condition. The length of the bitmap is the number of the measured reference signals. For example, if the i-th bit in the bitmap is 1, it indicates that the i-th reference signal among the measured reference signals meets the reporting condition, and if it is 0, it indicates that the reporting condition is not met.

In case that the quality of the reference signal is the L1-RSRP value of the reference signal, part2 includes N L1-RSRPs meeting the reporting condition corresponding to an order of the indexes of the reference signals mapped by the bitmap. Each reported L1-RSRP is quantized into L bits, and the RSRP is sorted in an order of the indexes of the reference signals with the bit of which in the bitmap is 1. For example, if the UE determines that the L1-RSRPs of the 1st, 5th, and 7th reference signals among the measured reference signals are greater than or equal to the threshold according to the reference signal measurement result, the UE determines that the content to be reported in part1 is 10001010. If the L1-RSRP greater than or equal to the threshold is quantized into 7 bits, the UE quantizes the RSRPs of the 1st, 5th, and 7th reference signals into 7 bits and map them in order.

In case that the quality of the reference signal is a differential value of L1-RSRPs of reference signals, part2 includes N L1-RSRPs meeting the reporting condition corresponding to an order of the indexes of the reference signals mapped by the bitmap, as well as an index of the reference signal with the largest L1-RSRP. The largest L1-RSRP is quantized into L bits, and the differential values between the remaining N-1 L1-RSRPs and the largest L1-RSRP are quantized into X bits.

UE may report that the number of bits occupied by the part1 is M, where M is the number of reference signals configured by the base station for user measurement. When the UE determines the size of the resources for reporting part2, it is determined according to referred reporting content in part2. The referred reporting content in part2 refers to the S RSRPs, where the value of S is configured by the base station or specified in the protocol.

In the information transmission method provided in an embodiment of the present application, part1 includes a bitmap mapped to indexes of reference signals meeting the reporting condition, and part2 includes qualities of the reference signals corresponding to an order of the indexes of the reference signals mapped by the bitmap, ensuring that the network side knows the number of bits required for the information reported by the UE, and enabling the network side to successfully demodulate the information reported by the UE.

In some embodiments, the first part of information includes qualities and indexes of a part of the reference signals meeting the reporting condition, and further includes the number of reference signals reported by the second part of information. The second part of information includes qualities and indexes of another part of the reference signals meeting the reporting condition.

In an embodiment, there are multiple ways to split the reporting information into part1 and part2. In an embodiment of the present application, part1 includes qualities and indexes of a part of the reference signals meeting the reporting condition, and further includes the number of reference signals reported by part2. Part2 includes qualities and indexes of another part of the reference signals meeting the reporting condition.

For example, part1 includes L1-RSRPs of N1 reference signals, the corresponding indexes of N1 reference signals, and N2, where N2=N-N1. Part2 reports N2 RSRPs and their corresponding indexes. Here, N1 is configured by the network side.

In case that the quality of the reference signal is the L1-RSRP value of the reference signal, the UE reports L1-RSRPs and indexes of N1 fixed reference signals in part1, and reports L1-RSRPs and indexes of the remaining reference signals meeting the reporting condition in part2. If the number N of reference signals meeting the reporting condition is less than N1, the UE reports the L1-RSRPs and indexes of N reference signals in part1, and reports L1-RSRPs of the remaining N1-N reference signals as special values (e.g., all are 0 or all are 1).

In case that the quality of the reference signal is a differential value of the L1-RSRPs of the reference signals, the L1-RSRPs of the N1 reference signals reported by the UE include a largest L1-RSRP and N1-1 differential L1-RSRP, and the L1-RSRPs of N2 reference signals is N2 differential L1-RSRPs. The largest L1-RSRP is quantized into L bits, and the differential L1-RSRPs are calculated as the differences between the measured L1-RSRPs and the largest L1-RSRP, which are quantized into X bits.

UE may report that the number of bits occupied by the part1 is the sum $\lceil \log_2(N2+1) \rceil$ of the number of bits of the L1-RSRPs of N1 reported reference signals and the number of bits of the corresponding indexes. When the UE determines the size of the resources for reporting part2, it is determined according to referred reporting content in part2. The referred reporting content in part2 refers to the reporting of W differential RSRPs and the corresponding indexes, where the value of W is configured by the base station or specified in the protocol.

In the information transmission method provided in an embodiment of the present application, part1 includes qualities and indexes of a part of the reference signals meeting the reporting condition, and further includes a number of reference signals reported by part2, and part2 includes qualities and indexes of another part of the reference signals meeting the reporting condition, ensuring that the network side knows the number of bits required for the information reported by the UE, and enabling the network side to successfully demodulate the information reported by the UE.

In some embodiments, the first part of information includes a bitmap mapped to the indexes of the reference signals meeting the reporting condition, and qualities of a part of the reference signals corresponding to an order of the indexes of the reference signals mapped by the bitmap. The second part of information includes qualities of another part of the reference signals corresponding to the order of the indexes of the reference signals mapped by the bitmap.

In an embodiment, there are multiple ways to split the reporting information into part1 and part2. In an embodiment of the present application, part1 includes a bitmap mapped to the indexes of the reference signals meeting the reporting condition, and qualities of a part of the reference signals corresponding to an order of the indexes of the reference signals mapped by the bitmap. Part2 includes the second part of information includes qualities of another part of the reference signals corresponding to the order of the indexes of the reference signals mapped by the bitmap.

For example, part1 includes the L1-RSRPs of N1 reference signals, an index corresponding to the largest RSRP and a bitmap, and part2 includes the L1-RSRPs of N2 reference signals. The N1 L1-RSRPs reported by part1 include the largest L1-RSRP, which is quantized into L bits, and N1-1 L1-RSRPs that are quantized into X bits and differential from the largest L1-RSRP. The N2 L1-RSRPs reported by part2 are the L1-RSRPs that are quantized into X bits and differential from the largest L1-RSRP. The differential L1-RSRPs reported by part1 and part2 are mapped according to an order of the indexes in the bitmap.

UE may report that the number of bits occupied by the part1 is the sum of the number of bits of L1-RSRPs of N1 r reference signals to be reported, the number of bits of an index of the largest RSRP to be reported and the number of bits occupied by the bitmap, where the number of bits of L1-RSRPs of N1 reference signals to be reported is $L+X*(N1-1)$, the number of bits of an index of the largest RSRP to be reported is $\lceil \log_2 M \rceil$, the number of the bits occupied by the bitmap is M, and M is the number of reference signals configured by the base station for user measurement. When the UE determines the size of the reporting resources in part2, it is determined according to referred reporting content in part2. The referred reporting content in part2 refers to the W differential RSRPs to be reported, where the value of W is configured by the base station or specified in the protocol.

In the information transmission method provided in an embodiment of the present application, part1 includes a bitmap mapped to indexes of reference signals meeting the reporting condition, and qualities of a part of the reference signals corresponding to an order of the indexes of the reference signals mapped by the bitmap, and part2 includes qualities of another part of the reference signals corresponding to the order of the indexes of the reference signals mapped by the bitmap, ensuring that the network side knows the number of bits required for the information reported by the UE, and enabling the network side to successfully demodulate the information reported by the UE.

In some embodiments, a quality of the reference signal is a L1-RSRP value of the reference signal and/or a differential value of L1-RSRPs of reference signals.

In an embodiment of the present application, the qualities of the reference signals may be all L1-RSRP values of the reference signals, or all differential values of the L1-RSRP of the reference signals, and may further include L1-RSRP values of a part of the reference signals and differential values of the L1-RSRP of another part of the reference signals.

In case that the qualities of the reference signals are all L1-RSRP values of the reference signals, the calculation amount of the network device may be reduced.

In case that the quality of the reference signals are all differential values of the L1-RSRPs of the reference signals, the feedback overhead of the UE may be reduced.

In some embodiments, in case that the reporting information is used for determining an optimal beam/beam pair for signal transmission, the reporting information includes indexes of beams/beam pairs meeting the reporting condition obtained through model inference.

In an embodiment of the present application, the model inference is performed on the UE side. After completing the model inference, the UE reports index values of the beams/beam pairs meeting the condition. After receiving information for the Top-K beams reported by the UE, the base station may scan these K beams/beam pairs. After measuring these K beams/beam pairs, the UE reports an optimal beam/beam pair to the base station.

For example, a classification model is used on the UE side, and an output of an AI/ML model on the UE side is the confidence (i.e., probability) of a beam/beam pair which is an optimal beam/beam pair in Set A. Under different channel conditions, the L1-RSRP values of the beams/beam pairs in Set B are different, and the probabilities obtained through each round of inference are also different.

In the information transmission method provided in an embodiment of the present application, the UE reports index values of beams/beam pairs meeting the condition after model inference. That is, the number of the indexes of optimal beams/beam pairs reported is not fixed, there may be scenarios where several beams/beam pairs have relatively high probabilities, and the number of the indexes of the beams/beam pairs to be reported is small. In other scenarios, there may be many beams/beam pairs with relatively close probabilities, and the number of indexes of the beams/beam pairs to be reported is large, ensuring that the beams/beam pairs received by the network device based on AI/ML model inference is more accurate and guaranteeing the accuracy of the determined optimal beams/beam pairs.

In some embodiments, the method further includes:

performing the model inference based on a trained artificial intelligence model, and determining a confidence corresponding to each beam/beam pair output by the artificial intelligence model; and

determining the indexes of the beams/beam pairs meeting the reporting condition based on the confidence corresponding to each beam/beam pair.

In an embodiment of the present application, a classification model is used on the UE side, and an output of an AI/ML model on the UE side is the confidence (i.e. probability) of a beam/beam pair which is the optimal beam/beam pair in Set A. Under different channel conditions, the L1-RSRP values of the beams/beam pairs in Set B are different, and the probabilities obtained through each round of inference are also different.

Before reporting the indexes of the beams/beam pairs meeting the reporting condition obtained through the model inference, the UE needs to perform the model inference based on a trained AI/ML model to determine the confidence corresponding to each beam/beam pair output by the AI/ML model, and determines the indexes of the beams/beam pairs meeting the reporting condition based on the confidence corresponding to each beam/beam pair.

In the information transmission method provided in an embodiment of the present application, model inference is performed on the UE side, improving the efficiency of beam management.

In some embodiments, the indexes of the beams/beam pairs meeting the reporting condition include indexes of a minimum number of beams/beam pairs whose total confidence is greater than or equal to a second threshold.

In an embodiment of the present application, the indexes of the beams/beam pairs meeting the reporting condition include indexes of a minimum number of beams/beam pairs whose total confidence is greater than or equal to a second threshold Threshold2. Threshold2 may be configured by the network side or specified in the protocol.

For example, when model inference is performed on the UE side, the UE needs to determine the number K of inference beam indexes to be reported based on the above-mentioned conditions, where K is the minimum number of beams/beam pairs whose total confidence is greater than or equal to the threshold Threshold2. For example, assuming Set A includes 8 beams/beam pairs, and the confidence reporting threshold Threshold2 is set to 0.7, when the confidence values output by the AI/ML model are [0.15, 0.3, 0.2, 0.15, 0.05, 0.05, 0.05, 0.05], the UE reports the indexes corresponding to the first 4 predicted beams (the total confidence is greater than or equal to the threshold). When the confidence values output by the AI/ML model are [0.05, 0.5, 0.2, 0.05, 0.05, 0.05, 0.05, 0.05], the UE reports the indexes of the second and third predicted beams.

In the information transmission method provided in an embodiment of the present application, the indexes of beams/beam pairs meeting the reporting condition include indexes of a minimum number of beams/beam pairs whose total confidence is greater than or equal to a second threshold Threshold2, ensuring the beams/beam pairs received by the network device based on AI/ML model inference to be more accurate, and guaranteeing the accuracy of the determined optimal beams/beam pairs.

In some embodiments, the first part of information includes indexes of a part of the beams/beam pairs meeting the reporting condition, and the second part of information includes indexes of another part of the beams/beam pairs meeting the reporting condition.

In an embodiment of the present application, when the UE reports the indexes of the beams/beam pairs meeting the reporting condition obtained through model inference, the reporting content is split into part1 and part2.

For example, the splitting method is as follows: part1 is K1 index values and the value of K2, where K2 = (K-K1), and part2 is K2 index values, where K1 is configured by the base station.

When the UE determines the size of the reporting resources, it is determined based on the number of bits occupied by part1 and the number of bits occupied by the referred reporting content in part2. The referred reporting content in part2 is the resources occupied by indexes of R predicted beams/beam pairs, where R is configured by the base station or specified in the protocol.

In the information transmission method provided by an embodiment of the present application, part1 includes indexes of a part of the beams/beam pairs meeting the reporting condition, and part2 includes indexes of another part of the beams/beam pairs meeting the reporting condition, ensuring that the network side knows the number of bits required for the information reported by the UE, and enabling the network side to successfully demodulate the information reported by the UE.

It should be noted that, in the above-mentioned embodiments, when splitting L1-RSRP or the index content of the beams/beam pairs obtained through inference, if the number of bits occupied by the actual reported part2 is less than the number of bits occupied by the referred part2, the coding rate for transmitting part2 is lower than the target coding rate when transmitting information on the PUCCH, and if the number of bits occupied by the actual reported part2 is greater than the number of bits occupied by the referred part2, the coding rate for transmitting part2 is greater than the target coding rate when transmitting information on the PUCCH.

The methods described in the above embodiments will be further illustrated below with several specific examples.

Example 1:

The base station configures the UE to measure 32 reference signals, corresponding to 32 beam pairs in Set B. The base station configures the UE with a reporting threshold of -100dBm, meaning that the UE reports qualities of the reference signals whose corresponding L1-RSRPs are greater than or equal to -100dBm to the base station. Assuming the UE measures that there are 8 reference signals among the 32 reference signals that satisfy L1-RSRP greater than or equal to -100dBm, the reporting content is shown in Table 1. Part1 reports a number of reference signals meeting the condition, and Part2 reports indexes of the reference signals meeting the reporting condition and the corresponding L1-RSRPs, where the largest L1-RSRP is quantized into 7 bits, and the differential L1-RSRP is quantized into 4 bits.

Table 1

| Part1 | The number of reported RS in part2 | 001000 |
|---|---|---|
| Part2 | Indicator of the resource corresponding to the largest L1-RSRP | 10111 |
| | CRI of the resource corresponding of the 1st reported differential L1-RSRP | 00111 |
| | ... | |
| | CRI of the resource corresponding of the 7th reported differential L1-RSRP | 10001 |
| | the largest L1-RSRP | 0100101 |
| | Differential RSRP | 0010 |
| | ... | |
| | Differential RSRP | 0011 |

Example 2:

The base station configures the UE to measure 32 reference signals, corresponding to 32 beam pairs in Set B. The base station configures the UE with a reporting threshold of - 100dBm, meaning that the UE reports qualities of the reference signals whose L1-RSRPs are greater than or equal to -100dBm to the base station. The base station configures the UE to report the indexes of 4 referred L1-RSRPs in part1, the index of the largest RSRP and bitmap. Assuming the UE measures that there are 8 reference signals among the 32 reference signals that satisfy L1-RSRP greater than or equal to -100dBm, the reporting content is shown in Table 2. Part1 reports a bitmap of a reference signal meeting the reporting condition, an index of the reference signal with the largest L1-RSRP, and the L1-RSRPs of four reference signals (one being the largest L1-RSRP and three being differential L1-RSRPs). Part2 reports four differential L1-RSRPs meeting the reporting condition, where the largest L1-RSRP is quantized into 7 bits and the differential L1-RSRP is quantized into 4 bits.

Table 2

| | The bit map of reported resource indicator | 00010001001110000001000010000001 (32bit) |
|---|---|---|
| Part1 | Indicator of the resource corresponding to the largest L1-RSRP | 00011 |
| | the largest L1-RSRP | 0100101 |
| | Differential RSRP | 1111 |
| | Differential RSRP | 1001 |
| | Differential RSRP | 0100 |
| Part2 | Differential RSRP | 0010 |
| | Differential RSRP | 0001 |
| | Differential RSRP | 0011 |
| | Differential RSRP | 1010 |

In Table 2, the differential L1-RSRPs reported by the UE are reported in an order indicated by the bitmap in part1. As shown in the bitmap in Table 2, it indicates that there are 8 reference signals among the 32 reference signals measured by the UE that meet the reporting condition, and indicates that the reference signal with the largest L1-RSRP is the 4th reference signal, and the other differential reference signals are mapped in an order of the indexed of the reference signals indicated by the bitmap.

Example 3:

When model inference is performed on the UE side, the confidence values of the AI/ML model output are [0.15, 0.3, 0.2, 0.15, 0.05, 0.05, 0.05, 0.05]. The base station configures the UE to report indexes of beams as an inference result whose total confidence is greater than or equal to 0.7, and configures the UE to report 3 indexes in part1 and 2 indexes in the reference part2. According to the reporting condition, the indexes of the beams corresponding to the first 4 confidence values is the ones meeting the condition. The reporting content is shown in Table 3. Part1 includes the indexes of the beams corresponding to the first 3 confidence values and the value 1 of K2, and part2 includes the index of the beam corresponding to the 4th confidence value. Since the number of bits occupied by the actual transmitted part2 is less than the number of bits occupied by the referred part2, the actual encoding rate for transmitting part2 is less than the target coding rate.

Table 3

| | | |
|---|---|---|
| Part1 | Indicator of the 1st beam | 001 |
| | Indicator of the 2nd beam | 010 |
| | Indicator of the3rd beam | 011 |
| | The value of K2 | 001 |
| Part2 | Indicator of the 4th beam | 100 |

The embodiment of the present application addresses the following problems: when model training and model inference are performed on a base station, how a user equipment (UE) reports L1-RSRP measurement result of a part of beams to the base station according to a reporting condition, and the base station is able to perform operations such as model training/inference for space domain or time domain beam prediction based on AI/ML models, reducing reporting overhead and ensuring the performance of the AI model, and when model inference is performed on a UE side, the UE reports the inference result to the base station according to the reporting condition, balancing the reporting overhead and the accuracy of obtaining the optimal beam.

FIG. 2 is a second schematic flowchart of an information transmission method provided by an embodiment of the present application. As shown in FIG. 2, the embodiment of the present application provides an information transmission method, the execution subject of which may be a network device, such as a base station. The method includes:

Step 201: obtaining reporting information reported by a terminal, where the reporting information is used for training an artificial intelligence model or used for determining an optimal beam/beam pair for signal transmission, and the reporting information is reported after being split into a first part of information and a second part of information.

In some embodiments, in case that the reporting information is used for training the artificial intelligence model, the reporting information includes qualities and indexes of reference signals meeting a reporting condition.

In some embodiments, the method further includes:

determining a training sample for model training based on the qualities and indexes of reference signals meeting the reporting condition; and

training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the method further includes:

performing beam scanning according to the indexes of the beams/beam pairs meeting the reporting condition, where the beam scanning is for determining the optimal beam/beam pair for signal transmission through beam measurement; and

obtaining the optimal beam/beam pair for signal transmission reported by the terminal.

The information transmission method provided by the embodiments of the present application may refer to the embodiment for the above-mentioned information transmission method where the execution subject being a terminal, and may achieve the same technical effect. The parts of the embodiments that are identical to the embodiments in the method and the beneficial effects thereof will not be described in detail here.

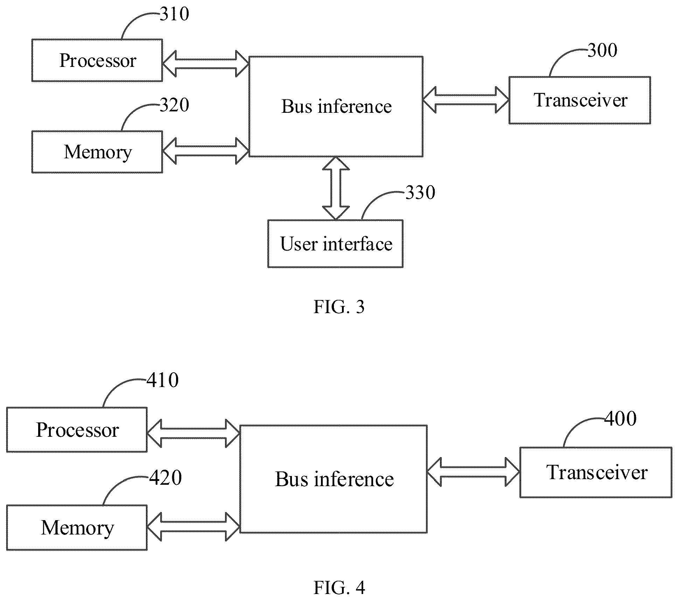

FIG. 3 is a schematic structural diagram of a terminal provided by an embodiment of the present application. As shown in FIG. 3, the terminal includes a memory 320, a transceiver 300, and a processor 310.

The memory 320 is used for storing a computer program, the transceiver 300 is used for receiving and transmitting data under control of the processor 310, and the processor 310 is used for reading the computer program in the memory 320 and performing following operations:

determining reporting information meeting a reporting condition, where the reporting information is used for training an artificial intelligence model or used for determining an optimal beam/beam pair for signal transmission; and

splitting the reporting information into a first part of information and a second part of information, and sending the first part of information and the second part of information to a network device.

As shown in FIG. 3, a bus architecture may include any number of interconnected buses and bridges, which are linked together through various circuits of one or more processors represented by the processor 310 and a memory represented by the memory 320. The bus architecture may also link together various other circuits, such as peripherals, voltage regulators, and power management circuits, etc., which are well known in the art, and therefore are not further described in the present application. The bus interface provides an interface. The transceiver 300 may include multiple elements, i.e., including a transmitter and a receiver, providing a unit for communication with various other devices over transmission media including wireless channels, wired channels, fiber optic cables, and the like. For different user devices, a user interface 330 may also be an interface that may be connected to external and internal devices, and the connected devices include but are not limited to keypads, displays, speakers, microphones, joysticks, etc.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD), and the processor may also use a multi-core architecture.

The processor calls the computer program stored in the memory to execute any of the methods provided by the embodiments of the present application according to the obtained executable instructions. The processor and the memory may also be physically arranged separately.

In some embodiments, the first part of information occupies a fixed number of bits, and a number of bits occupied by the second part of information is determined by content of the first part of information.

In some embodiments, in case that the reporting information is used for training the artificial intelligence model, the reporting information includes qualities and indexes of reference signals meeting the reporting condition.

In some embodiments, the reference signals meeting the reporting condition include a reference signal whose corresponding layer 1 reference signal received power (L1-RSRP) is greater than or equal to a first threshold.

In some embodiments, the first part of information includes a number of the reference signals meeting the reporting condition, and the second part of information includes the qualities and indexes of the reference signals meeting the reporting condition.

In some embodiments, the first part of information includes a bitmap mapped to the indexes of the reference signals meeting the reporting condition, and the second part of information includes qualities of the reference signals corresponding to an order of the indexes of the reference signals mapped by the bitmap.

In some embodiments, the first part of information includes qualities and indexes of a part of the reference signals meeting the reporting condition, and further includes a number of reference signals reported by the second part of information; and the second part of information includes qualities and indexes of another part of the reference signals meeting the reporting condition.

In some embodiments, the first part of information includes a bitmap mapped to the indexes of the reference signals meeting the reporting condition, and qualities of a part of the reference signals corresponding to an order of the indexes of the reference signals mapped by the bitmap, and the second part of information includes qualities of another part of the reference signals corresponding to the order of the indexes of the reference signals mapped by the bitmap.

In some embodiments, a quality of the reference signal is a L1-RSRP value of the reference signal and/or a differential value of L1-RSRPs of reference signals.

In some embodiments, in case that the reporting information is used for determining the optimal beam/beam pair for signal transmission, the reporting information includes indexes of beams/beam pairs meeting the reporting condition obtained through model inference.

In some embodiments, the processor is further used for reading a computer program in the memory and performing the following operations:

performing the model inference based on a trained artificial intelligence model, and determining a confidence corresponding to each beam/beam pair output by the artificial intelligence model; and

determining the indexes of the beams/beam pairs meeting the reporting condition based on the confidence corresponding to each beam/beam pair.

In some embodiments, the indexes of the beams/beam pairs meeting the reporting condition include indexes of a minimum number of beams/beam pairs whose total confidence is greater than or equal to a second threshold.

In some embodiments, the first part of information includes indexes of a part of the beams/beam pairs meeting the reporting condition, and the second part of information includes indexes of another part of the beams/beam pairs meeting the reporting condition.

It should be noted that the above-mentioned terminal provided by the embodiment of the present application may implement all the steps of the method implemented in the embodiment of the method where the UE being the execution subject, and may achieve the same technical effect. The parts of the embodiment that are identical to the embodiments in the method and the beneficial effects thereof will not be described in detail here.

FIG. 4 is a schematic structural diagram of a network device provided in an embodiment of the present application. As shown in FIG. 4, the network device includes a memory 420, a transceiver 400, and a processor 410.

The memory 420 is used for storing a computer programs, the transceiver 400 is used for receiving and transmitting data under control of the processor 410, and the processor 410 is used for reading the computer program in the memory 420 and performing following operation:

obtaining reporting information reported by a terminal, where the reporting information is used for training an artificial intelligence model or used for determining an optimal beam/beam pair for signal transmission, and the reporting information is reported after being split into a first part of information and a second part of information.

As shown in FIG. 4, a bus architecture may include any number of interconnected buses and bridges, which are linked together through various circuits of one or more processors represented by the processor 410 and a memory represented by the memory 420. The bus architecture may also link together various other circuits, such as peripherals, voltage regulators, and power management circuits, etc., which are well known in the art, and therefore are not further described in the present application. The bus interface provides an interface. The transceiver 400 may include multiple elements, i.e., including a transmitter and a receiver, providing a unit for communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), and the processor may also use a multi-core architecture.

In some embodiments, in case that the reporting information is used for training the artificial intelligence model, the reporting information includes qualities and indexes of reference signals meeting a reporting condition.

In some embodiments, the processor is further used for reading the computer program in the memory and perform following operations:

determining a training sample for model training based on the qualities and indexes of reference signals meeting the reporting condition; and

training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the processor is further used for reading the computer program in the memory and perform following operations:

performing beam scanning according to the indexes of the beams/beam pairs meeting the reporting condition; the beam scanning is for determining the optimal beam/beam pair for signal transmission through beam measurement; and

obtaining the optimal beam/beam pair for signal transmission reported by the terminal.

In an embodiment, the above-mentioned network device provided in the embodiments of the present application may implement all the steps of the method implemented in the above-mentioned embodiments of the method where the network device is the execution subject, and may achieve the same technical effect. The parts of the embodiments that are identical to the embodiments in the method and the beneficial effects thereof will not be described in detail here.

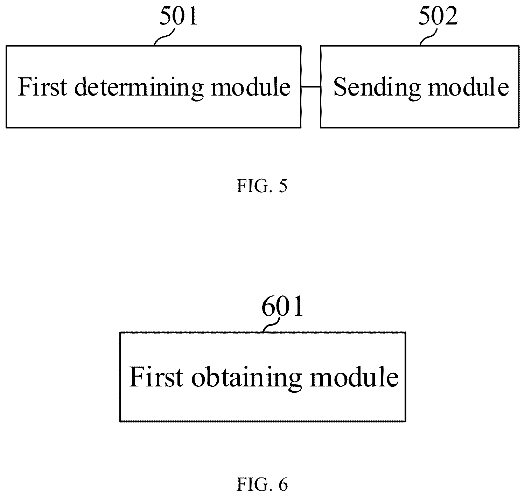

FIG. 5 is a first schematic structural diagram of an information transmission apparatus provided by an embodiment of the present application. As shown in FIG. 5, the present application provides an information transmission apparatus, including a first determining module 501 and a sending module 502.

The first determining module 501 is used for determining reporting information meeting a reporting condition, where the reporting information is used for training an artificial intelligence model or used for determining an optimal beam/beam pair for signal transmission. The sending module 502 is used for splitting the reporting information into a first part of information and a second part of information, and sending the first part of information and the second part of information to a network device.

In some embodiments, the first part of information occupies a fixed number of bits, and a number of bits occupied by the second part of information is determined by content of the first part of information.

In some embodiments, in case that the reporting information is used for training the artificial intelligence model, the reporting information includes qualities and indexes of reference signals meeting the reporting condition.

In some embodiments, the reference signal meeting the reporting condition includes a reference signal with corresponding layer 1 reference signal received power (L1-RSRP) being greater than or equal to a first threshold.

In some embodiments, the first part of information includes a number of the reference signals meeting the reporting condition, and the second part of information includes the qualities and indexes of the reference signals meeting the reporting condition.

In some embodiments, the first part of information includes a bitmap mapped to the indexes of the reference signals meeting the reporting condition, and the second part of information includes qualities of the reference signals corresponding to an order of the indexes of the reference signals mapped by the bitmap.

In some embodiments, the first part of information includes qualities and indexes of a part of the reference signals meeting the reporting condition, and further includes a number of reference signals reported by the second part of information. The second part of information includes qualities and indexes of another part of the reference signals meeting the reporting condition.

In some embodiments, the first part of information includes a bitmap mapped to the indexes of the reference signals meeting the reporting condition, and qualities of a part of the reference signals corresponding to an order of the indexes of the reference signals mapped by the bitmap. The second part of information includes qualities of another part of the reference signals corresponding to the order of the indexes of the reference signals mapped by the bitmap.

In some embodiments, a quality of the reference signal is a L1-RSRP value of the reference signal and/or a differential value of L1-RSRPs of reference signals.

In some embodiments, in case that the reporting information is used for determining the optimal beam/beam pair for signal transmission, the reporting information includes indexes of beams/beam pairs meeting the reporting condition obtained through model inference.

In some embodiments, the apparatus further includes a second determining module and a third determining module.

The second determining module is used for performing the model inference based on a trained artificial intelligence model and determining a confidence corresponding to each beam/beam pair output by the artificial intelligence model.

The third determining module is used for determining the indexes of the beams/beam pairs meeting the reporting condition based on the confidence corresponding to each beam/beam pair.

In some embodiments, the indexes of the beams/beam pairs meeting the reporting condition includes indexes of a minimum number of beams/beam pairs whose total confidence is greater than or equal to a second threshold.

In some embodiments, the first part of information includes indexes of a part of the beams/beam pairs meeting the reporting condition, and the second part of information includes indexes of another part of the beams/beam pairs meeting the reporting condition.

In an embodiment, the information transmission apparatus provided in the embodiments of the present application may implement all the steps of the method implemented in the above-mentioned embodiments of the method where the execution subject is a terminal, and may achieve the same technical effect. The parts of the embodiments that are identical to the embodiments in the method and the beneficial effects thereof will not be described in detail here.

FIG. 6 is a second schematic structural diagram of an information transmission apparatus provided BY an embodiment of the present application. As shown in Fig. 6, an embodiment of the present application provides an information transmission apparatus, including a first obtaining module 601.

The first obtaining module 601 is used for obtaining reporting information reported by a terminal, where the reporting information is used for training an artificial intelligence model or used for determining an optimal beam/beam pair for signal transmission, and the reporting information is reported after being split into a first part of information and a second part of information.

In some embodiments, in case that the reporting information is used for training the artificial intelligence model, the reporting information includes qualities and indexes of reference signals meeting the reporting condition.

In some embodiments, the apparatus further includes a fourth determining module and a training module.

The fourth determining module is used for determining a training sample for model training based on the qualities and indexes of reference signals meeting the reporting condition.

The training module is used for training the artificial intelligence model using the training sample.

In some embodiments, in case that the reporting information is used for determining the optimal beam/beam pair for signal transmission, the reporting information includes indexes of beams/beam pairs meeting the reporting condition obtained through model inference.

In some embodiments, the apparatus further includes a beam scanning module and a second obtaining module.

The beam scanning module is used for performing beam scanning according to the indexes of the beams/beam pairs meeting the reporting condition, and the beam scanning is for determining the optimal beam/beam pair for signal transmission through beam measurement.

The second obtaining module is used for obtaining the optimal beam/beam pair for signal transmission reported by the terminal.

In an embodiment, the information transmission apparatus provided in the embodiments of the present application may implement all the steps of the method implemented in the above-mentioned embodiments of the method where the execution subject is a network device, and may achieve the same technical effect. The parts of the embodiment that are identical to the embodiments in the method and the beneficial effects thereof will not be described in detail here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

In some embodiments, a computer-readable storage medium is provided, where the computer-readable storage medium stores a computer program, and the computer program is used to cause a computer to perform the information transmission method provided by the various embodiments of the present application.

In an embodiment, the computer-readable storage medium provided in the embodiment of the present application may implement all the steps of the method implemented in the above-mentioned embodiments of the method, and may achieve the same technical effect. The parts of the embodiment that are identical to the embodiments in the method and the beneficial effects thereof will not be described in detail here.

It should be noted that, the computer-readable storage medium may be any available medium or data storage device that may be accessed by the processor, including but not limited to disk memory (such as a floppy disk, a hard disk, a magnetic tape, a magneto-optical disk (MO)), an optical memory (such as a CD, a DVD, a BD, a HVD, etc.), and semiconductor memory (such as ROM, EPROM, EEPROM, a non-volatile memory (NAND FLASH), a solid-state drive (SSDs)), etc.

It should also be noted that, the terms "first", "second", etc. are used for distinguishing similar objects, and are not used for describing a specific order or sequence. It should be understood that the terms used in this manner are interchangeable where appropriate, so that the embodiments of the present application may be implemented in an order other than those illustrated or described herein. The objects distinguished by "first" and "second" are generally of the same type and do not limit the number of objects, for example, the first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, "determine B based on A" means that factor A should be considered when determining B. It is not limited to "B may be determined based on A alone", but should also include: "B is determined based on A and C", "B is determined based on A, C and E", "C is determined based on A, and B is further determined based on C", etc. It may further include using A as a condition for determining B, for example, "when A meets the first condition, B is determined using the first method", or "B is determined when A meets the second condition", or "when A meets the third condition, B is determined based on the first parameter", etc. A may also be used as a condition to determine B, for example, "when A meets the first condition, C is determined using the first method, and B is further determined based on C", etc.

In the embodiments of the present application, the term "multiple" refers to two or more than two, and other quantifiers are similar thereto.

The solutions provided by the embodiments of the present application may be performed by a variety of systems, especially 5G systems. For example, applicable systems may be the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, the 5G new radio (NR) system, etc. These various systems include terminal devices and network devices. The system may further include core network parts, such as the evolved packet system (EPS), the 5G System (5GS), etc.

The terminal device involved in the embodiments of the present application may refer to a device that provides voice and/or data connectivity to users, a handheld device with wireless connection function, or other processing devices connected to a wireless modem. In different systems, the terminal device may also have different names. For example, in a 5G system, the terminal device may be called as user equipment (UE). Wireless terminal devices may communicate with one or more core networks (CN) via a radio access network (RAN). Wireless terminal devices may be mobile terminal devices, such as mobile phones (or "cellular" phones) and computers equipped with mobile terminal devices, for example, portable, pocket-sized, handheld, computer-built-in or vehicle-mounted mobile devices, which exchange voice and/or data with the radio access network. Examples include personal communication service (PCS) phones, cordless phones, session initiated protocol (SIP) phones, wireless local loop (WLL) stations, personal digital assistants (PDAs), and other devices. The wireless terminal device may also be called as a system, a subscriber unit, a subscriber station, a mobile station, a mobile station, a remote station, an access point, a remote terminal device, an access terminal device, a user terminal device, a user agent, or a user device, but is not limited in the embodiments of the present application.

The network device involved in the embodiments of the present application may refer to a base station that may include multiple cells that provide services to terminals. Depending on the specific application, a base station may also be called an access point, or it may be a device in the access network that communicates with wireless terminal devices through one or more sectors on the air interface, or other names. Network devices may be used to exchange received air frames with Internet Protocol (IP) packets, and act as routers between wireless terminal devices and the rest of the access network, which may include Internet Protocol (IP) communication networks. Network devices may also coordinate the management of attributes for air interfaces. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network architectures, network devices may include centralized unit (CU) nodes and distributed unit (DU) nodes, which may also be geographically separated.

Network devices and terminal devices may each use one or more antennas to perform multiple input multiple output (MIMO) transmission. MIMO transmission may be single user MIMO (SU-MIMO) or multiple user MIMO (MU-MIMO). Depending on the shape and number of the root antenna combinations, MIMO transmission may be 2D-MIMO, 3D-MIMO, FD-MIMO or massive-MIMO, or it may be diversity transmission, precoding transmission or beamforming transmission, etc.

As will be appreciated by those skilled in the art, embodiments of the present application may be provided as methods, systems, or computer program products. Therefore, the embodiment of the present application may be in the form of a complete hardware, a complete software, or a combination of software and hardware. Moreover, the present application may take the form of a computer program product implemented on one or more computer-usable storage media (including but not limited to a disk memory, an optical memory, etc.) having computer-usable program code.

The present application is described with reference to flowcharts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for implementing the functions specified in one or more flows in a flowchart and/or one or more blocks in a block diagram.

These processor-executable instructions may also be stored in a processor-readable memory capable of directing a computer or other programmable data processing device to operate in a particular manner, and the instructions stored in the processor-readable memory may result in a manufacture including instruction means, the instruction means may implement the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for implementing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. An information transmission method, performed by a terminal, comprising:

   determining reporting information meeting a reporting condition, wherein the reporting information is used for training an artificial intelligence model or used for determining an optimal beam/beam pair for signal transmission; and
   splitting the reporting information into a first part of information and a second part of information, and sending the first part of information and the second part of information to a network device.

2. The information transmission method of claim 1, wherein:

   the first part of information occupies a fixed number of bits; and
   a number of bits occupied by the second part of information is determined by content of the first part of information.

3. The information transmission method of claim 1, wherein:
   in case that the reporting information is used for training the artificial intelligence model, the reporting information comprises qualities and indexes of reference signals meeting the reporting condition.

4. The information transmission method of claim 3, wherein:
   the reference signals meeting the reporting condition comprise a reference signal whose corresponding layer 1 reference signal received power (L1-RSRP) is greater than or equal to a first threshold.

5. The information transmission method of claim 4, wherein:

   the first part of information comprises a number of the reference signals meeting the reporting condition; and
   the second part of information comprises the qualities and indexes of the reference signals meeting the reporting condition.

6. The information transmission method of claim 4, wherein:

   the first part of information comprises a bitmap mapped to the indexes of the reference signals meeting the reporting condition; and
   the second part of information comprises qualities of the reference signals corresponding to an order of the indexes of the reference signals mapped by the bitmap.

7. The information transmission method of claim 4, wherein:

   the first part of information comprises qualities and indexes of a part of the reference signals meeting the reporting condition, and further comprises a number of reference signals reported by the second part of information; and
   the second part of information comprises qualities and indexes of another part of the reference signals meeting the reporting condition.

8. The information transmission method of claim 4, wherein:

   the first part of information comprises a bitmap mapped to the indexes of the reference signals meeting the reporting condition, and qualities of a part of the reference signals corresponding to an order of the indexes of the reference signals mapped by the bitmap; and
   the second part of information comprises qualities of another part of the reference signals corresponding to the order of the indexes of the reference signals mapped by the bitmap.

9. The information transmission method of any of claims 5 to 8, wherein:
a quality of the reference signal is a L1-RSRP value of the reference signal and/or a differential value of L1-RSRPs of reference signals.

10. The information transmission method of claim 1, wherein:
in case that the reporting information is used for determining the optimal beam/beam pair for signal transmission, the reporting information comprises indexes of beams/beam pairs meeting the reporting condition obtained through model inference.

11. The information transmission method of claim 10, the method further comprises:

performing the model inference based on a trained artificial intelligence model, and determining a confidence corresponding to each beam/beam pair output by the artificial intelligence model; and
determining the indexes of the beams/beam pairs meeting the reporting condition based on the confidence corresponding to each beam/beam pair.

12. The information transmission method of claim 10 or 11, wherein:
the indexes of the beams/beam pairs meeting the reporting condition comprise indexes of a minimum number of beams/beam pairs whose total confidence is greater than or equal to a second threshold.

13. The information transmission method of claim 10 or 11, wherein:

the first part of information comprises indexes of a part of the beams/beam pairs meeting the reporting condition; and
the second part of information comprises indexes of another part of the beams/beam pairs meeting the reporting condition.

14. An information transmission method, performed by a network device, comprising:
obtaining reporting information reported by a terminal, wherein the reporting information is used for training an artificial intelligence model or used for determining an optimal beam/beam pair for signal transmission, and the reporting information is reported after being split into a first part of information and a second part of information.

15. The information transmission method of claim 14, wherein:
in case that the reporting information is used for training the artificial intelligence model, the reporting information comprises qualities and indexes of reference signals meeting a reporting condition.

16. The information transmission method of claim 15, the method further comprises:

determining a training sample for model training based on the qualities and indexes of reference signals meeting the reporting condition; and
training the artificial intelligence model using the training sample.

17. The information transmission method of claim 14, wherein:
in case that the reporting information is used for determining the optimal beam/beam pair for signal transmission, the reporting information comprises indexes of beams/beam pairs meeting the reporting condition obtained through model inference.

18. The information transmission method of claim 17, wherein the method further comprises:

performing beam scanning according to the indexes of the beams/beam pairs meeting the reporting condition, wherein the beam scanning is for determining the optimal beam/beam pair for signal transmission through beam measurement; and
obtaining the optimal beam/beam pair for signal transmission reported by the terminal.

19. A terminal, comprising a memory, a transceiver, and a processor, wherein:
the memory is used for storing a computer program, the transceiver is used for receiving and transmitting data under control of the processor, and the processor is used for reading the computer program in the memory and performing following operations:

determining reporting information meeting a reporting condition, wherein the reporting information is used for training an artificial intelligence model or used for determining an optimal beam/beam pair for signal transmission; and

splitting the reporting information into a first part of information and a second part of information, and sending the first part of information and the second part of information to a network device.

20. The terminal of claim 19, wherein:

the first part of information occupies a fixed number of bits; and
a number of bits occupied by the second part of information is determined by content of the first part of information.

21. The terminal of claim 19, wherein:
in case that the reporting information is used for training the artificial intelligence model, the reporting information comprises qualities and indexes of reference signals meeting the reporting condition.

22. The terminal of claim 21, wherein:
the reference signals meeting the reporting condition comprise a reference signal whose corresponding layer 1 reference signal received power (L1-RSRP) is greater than or equal to a first threshold.

23. The terminal of claim 22, wherein:

the first part of information comprises a number of the reference signals meeting the reporting condition; and
the second part of information comprises the qualities and indexes of the reference signals meeting the reporting condition.

24. The terminal of claim 22, wherein:

the first part of information comprises a bitmap mapped to the indexes of the reference signals meeting the reporting condition; and
the second part of information comprises qualities of the reference signals corresponding to an order of the indexes of the reference signals mapped by the bitmap.

25. The terminal of claim 22, wherein:

the first part of information comprises qualities and indexes of a part of the reference signals meeting the reporting condition, and further comprises a number of reference signals reported by the second part of information; and
the second part of information comprises qualities and indexes of another part of the reference signals meeting the reporting condition.

26. The terminal of claim 22, wherein:

the first part of information comprises a bitmap mapped to the indexes of the reference signals meeting the reporting condition, and qualities of a part of the reference signals corresponding to an order of the indexes of the reference signals mapped by the bitmap; and
the second part of information comprises qualities of another part of the reference signals corresponding to the order of the indexes of the reference signals mapped by the bitmap.

27. The terminal of any of claims 23 to 26, wherein:
a quality of the reference signal is a L1-RSRP value of the reference signal and/or a differential value of L1-RSRPs of reference signals.

28. The terminal of claim 19, wherein:
in case that the reporting information is used for determining the optimal beam/beam pair for signal transmission, the reporting information comprises indexes of beams/beam pairs meeting the reporting condition obtained through model inference.

29. The terminal of claim 28, wherein:
the processor is further used for reading the computer program in the memory and performing following operations:

performing the model inference based on a trained artificial intelligence model, and determining a confidence corresponding to each beam/beam pair output by the artificial intelligence model; and

determining the indexes of the beams/beam pairs meeting the reporting condition based on the confidence corresponding to each beam/beam pair.

30. The terminal of claim 28 or 29, wherein:
the indexes of the beams/beam pairs meeting the reporting condition comprise indexes of a minimum number of beams/beam pairs whose total confidence is greater than or equal to a second threshold.

31. The terminal of claim 28 or 29, wherein:

the first part of information comprises indexes of a part of the beams/beam pairs meeting the reporting condition; and

the second part of information comprises indexes of another part of the beams/beam pairs meeting the reporting condition.

32. A network device, comprising a memory, a transceiver, and a processor, wherein:
the memory is used for storing a computer program, the transceiver is used for receiving and transmitting data under control of the processor, and the processor is used for reading the computer program in the memory and performing following operation:
obtaining reporting information reported by a terminal, wherein the reporting information is used for training an artificial intelligence model or used for determining an optimal beam/beam pair for signal transmission, and the reporting information is reported after being split into a first part of information and a second part of information.

33. The network device of claim 32, wherein:
in case that the reporting information is used for training the artificial intelligence model, the reporting information comprises qualities and indexes of reference signals meeting a reporting condition.

34. The network device of claim 33, wherein:
the processor is further used for reading the computer program in the memory and performing following operations:

determining a training sample for model training based on the qualities and indexes of reference signals meeting the reporting condition; and

training the artificial intelligence model using the training sample.

35. The network device of claim 32, wherein:
in case that the reporting information is used for determining the optimal beam/beam pair for signal transmission, the reporting information comprises indexes of beams/beam pairs meeting the reporting condition obtained through model inference.

36. The network device of claim 35, wherein:
the processor is further used for reading the computer program in the memory and performing following operations:

performing beam scanning according to the indexes of the beams/beam pairs meeting the reporting condition; the beam scanning is for determining the optimal beam/beam pair for signal transmission through beam measurement; and

obtaining the optimal beam/beam pair for signal transmission reported by the terminal.

37. An information transmission apparatus, comprising:

a first determining module, used for determining reporting information meeting a reporting condition, wherein the reporting information is used for training an artificial intelligence model or used for determining an optimal beam/beam pair for signal transmission; and

a sending module, used for splitting the reporting information into a first part of information and a second part of information, and sending the first part of information and the second part of information to a network device.

38. The information transmission apparatus of claim 37, wherein:

the first part of information occupies a fixed number of bits; and

a number of bits occupied by the second part of information is determined by content of the first part of information.

39. The information transmission apparatus of claim 37, wherein:

in case that the reporting information is used for training the artificial intelligence model, the reporting information comprises qualities and indexes of reference signals meeting the reporting condition.

40. The information transmission apparatus of claim 39, wherein:

the reference signals meeting the reporting condition comprise a reference signal whose corresponding layer 1 reference signal received power (L1-RSRP) is greater than or equal to a first threshold.

41. The information transmission apparatus of claim 40, wherein:

the first part of information comprises a number of the reference signals meeting the reporting condition; and

the second part of information comprises the qualities and indexes of the reference signals meeting the reporting condition.

42. The information transmission apparatus of claim 40, wherein:

the first part of information comprises a bitmap mapped to the indexes of the reference signals meeting the reporting condition; and

the second part of information comprises qualities of the reference signals corresponding to an order of the indexes of the reference signals mapped by the bitmap.

43. The information transmission apparatus of claim 40, wherein:

the first part of information comprises qualities and indexes of a part of the reference signals meeting the reporting condition, and further comprises a number of reference signals reported by the second part of information; and

the second part of information comprises qualities and indexes of another part of the reference signals meeting the reporting condition.

44. The information transmission apparatus of claim 40, wherein:

the first part of information comprises a bitmap mapped to the indexes of the reference signals meeting the reporting condition, and qualities of a part of the reference signals corresponding to an order of the indexes of the reference signals mapped by the bitmap; and

the second part of information comprises qualities of another part of the reference signals corresponding to the order of the indexes of the reference signals mapped by the bitmap.

45. The information transmission apparatus of any of claims 41 to 44, wherein:

a quality of the reference signal is a L1-RSRP value of the reference signal and/or a differential value of L1-RSRPs of reference signals.

46. The information transmission apparatus of claim 37, wherein:

in case that the reporting information is used for determining the optimal beam/beam pair for signal transmission, the reporting information comprises indexes of beams/beam pairs meeting the reporting condition obtained through model inference.

47. The information transmission apparatus of claim 46, wherein:

the apparatus further comprises a second determining module and a third determining module;

the second determining module is used for performing the model inference based on a trained artificial intelligence model and determining a confidence corresponding to each beam/beam pair output by the artificial intelligence model; and

the third determining module is used for determining the indexes of the beams/beam pairs meeting the reporting condition based on the confidence corresponding to each beam/beam pair.

48. The information transmission apparatus of claim 46 or 47, wherein:

the indexes of the beams/beam pairs meeting the reporting condition comprises indexes of a minimum number of beams/beam pairs whose total confidence is greater than or equal to a second threshold.

49. The information transmission apparatus of claim 46 or 47, wherein:

the first part of information comprises indexes of a part of the beams/beam pairs meeting the reporting condition; and
the second part of information comprises indexes of another part of the beams/beam pairs meeting the reporting condition.

50. An information transmission apparatus, comprising:
a first obtaining module, used for obtaining reporting information reported by a terminal, wherein the reporting information is used for training an artificial intelligence model or used for determining an optimal beam/beam pair for signal transmission, and the reporting information is reported after being split into a first part of information and a second part of information.

51. The information transmission apparatus of claim 50, wherein:
in case that the reporting information is used for training the artificial intelligence model, the reporting information comprises qualities and indexes of reference signals meeting the reporting condition.

52. The information transmission apparatus of claim 51, wherein:

the apparatus further comprises a fourth determining module and a training module;
the fourth determining module is used for determining a training sample for model training based on the qualities and indexes of reference signals meeting the reporting condition; and
the training module is used for training the artificial intelligence model using the training sample.

53. The information transmission apparatus of claim 50, wherein:
in case that the reporting information is used for determining the optimal beam/beam pair for signal transmission, the reporting information comprises indexes of beams/beam pairs meeting the reporting condition obtained through model inference.

54. The information transmission apparatus of claim 53, wherein:

the apparatus further comprises a beam scanning module and a second obtaining module;
the beam scanning module is used for performing beam scanning according to the indexes of the beams/beam pairs meeting the reporting condition, and the beam scanning is for determining the optimal beam/beam pair for signal transmission through beam measurement; and
the second obtaining module is used for obtaining the optimal beam/beam pair for signal transmission reported by the terminal.

55. A computer-readable storage medium storing a computer program, wherein the computer program is used to cause a computer to perform the information transmission method of any of claims 1 to 13.

56. A computer-readable storage medium storing a computer program, wherein the computer program is used to cause a computer to perform the information transmission method of any of claims 14 to 18.

Determine reporting information meeting a reporting condition, where the reporting information is used for training an artificial intelligence model or used for determining an optimal beam/ beam pair for signal transmission — 101

Split the reporting information into a first part of information and a second part of information, and send the first part of information and second part of information to a network device — 102

FIG. 1

Start

Obtain reporting information reported by a terminal equipment, where the reporting information is used for training an artificial intelligence model or used for determining an optimal beam/beam pair for signal transmission, and the reporting information is reported after being split into a first part of information and a second part of information — 201

FIG. 2

FIG. 3

FIG. 4

501

502

| First determining module | Sending module |

FIG. 5

601

| First obtaining module |

FIG. 6

## INTERNATIONAL SEARCH REPORT

| International application No. |
| --- |
| **PCT/CN2024/093069** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, DWPI: 波束, 波束对, 测量, 人工智能, 机器学习, 模型, 训练, 确定, 上报, 拆分, 条件, beam, pair, measurement, artificial intelligence, AI, machine learning, ML, model, training, determine, report, partition, condition

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115398823 A (QUALCOMM INC.) 25 November 2022 (2022-11-25) description, paragraphs 0003-0135, and figures 1-10 | 1-56 |
| A | CN 111492593 A (TELEFONAKTIEBOLAGET LM ERICSSON (PUBL)) 04 August 2020 (2020-08-04) entire document | 1-56 |
| A | CN 114503447 A (SONY CORP.) 13 May 2022 (2022-05-13) entire document | 1-56 |
| A | US 2023057057 A1 (TELEFONAKTIEBOLAGET LM ERICSSON (PUBL)) 23 February 2023 (2023-02-23) entire document | 1-56 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 July 2024** | **22 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/093069**

| Patent document cited in search report | | | Publication date (day/month/year) | Patent family member(s) | | | Publication date (day/month/year) |
|---|---|---|---|---|---|---|---|
| CN | 115398823 | A | 25 November 2022 | WO | 2021216977 | A1 | 28 October 2021 |
| | | | | US | 2021336683 | A1 | 28 October 2021 |
| | | | | EP | 4140056 | A1 | 01 March 2023 |
| | | | | IN | 202227043820 | A | 07 October 2022 |
| CN | 111492593 | A | 04 August 2020 | WO | 2019119442 | A1 | 27 June 2019 |
| | | | | US | 2022014246 | A1 | 13 January 2022 |
| | | | | US | 2020313741 | A1 | 01 October 2020 |
| | | | | EP | 3729677 | A1 | 28 October 2020 |
| CN | 114503447 | A | 13 May 2022 | EP | 4018216 | A1 | 29 June 2022 |
| | | | | US | 2022393748 | A1 | 08 December 2022 |
| | | | | WO | 2021064238 | A1 | 08 April 2021 |
| US | 2023057057 | A1 | 23 February 2023 | WO | 2021144607 | A1 | 22 July 2021 |

Form PCT/ISA/210 (patent family annex) (July 2022)

**EP 4 730 685 A1**

**Patent documents cited in the description**

- CN 202310723470 X